# EUROPEAN PATENT SPECIFICATION

(11) **EP 2 526 059 B1**
(45) Date of publication and mention of the grant of the patent: **30.05.2018**
(21) Application number: 11700133.9
(22) Date of filing: 11.01.2011
(51) Int. Cl.: C01G 23/053, C09C 1/36

(54) **ANATASE WHITE PIGMENT WITH HIGH LIGHT AND WEATHER RESISTANCE**
WEISSES ANATASEPIGMENT MIT HOHER LICHT- UND WETTERBESTÄNDIGKEIT
PIGMENT BLANC D'ANATASE AYANT UNE RÉSISTANCE ÉLEVÉE À LA LUMIÈRE ET AUX INTEMPÉRIES

(30) Priority: 20.01.2010 DE 102010001051
(43) Date of publication of application: 28.11.2012
(73) Proprietor: Sachtleben Chemie GmbH, 47198 Duisburg (DE)
(72) Inventor: GRIEBLER, Wolf-Dieter, 47441 Moers (DE); GESENHUES, Ulrich, 47441 Moers (DE)
(74) Representative: Nobbe, Matthias
(86) International application number: PCT/EP2011/050281
(87) International publication number: WO 2011/089043

(56) References cited:
- WO-A1-2007/141342
- US-A- 6 113 873
- HIRANO MASANORI ET AL: "New Anatase-Type Ti1-2xNbxAlxO2 Solid Solution Nanoparticles: Direct Formation, Phase Stability, and Photocatalytic Performance", JOURNAL OF NANOSCIENCE AND NANOTECHNOLOGY, AMERICAN SCIENTIFIC PUBLISHERS, US, vol. 6, no. 12, 1 December 2006 (2006-12-01), pages 3820-3827, XP009145661, ISSN: 1533-4880
- L. E. DEPERO, A. MARINO, B. ALLIERI, E. BONTEMPI, L. SANGALETTI, C. CASALE AND M. NOTARO: "Morphology and microstructural properties of TiO2 nanopowders doped with trivalent Al and Ga cations", J. MATER. RES., vol. 15, no. 10, October 2000 (2000-10), pages 2080-2086, XP002628094,

## Description

The invention concerns a TiO₂ white pigment in anatase form with high light and weather resistance. That light and weather resistance is comparable to those of rutile white pigments but the TiO₂ pigment in anatase form has advantages over the rutile form in respect of blue tint, lesser hardness and lesser abrasiveness.

TiO₂ white pigments are used on a worldwide basis universally for dulling, white colouring and colour shading of chemical fibres, plastic materials, composite materials such as GRP and paper laminates as well as paints and lacquers. In that respect, depending on the respective use involved, TiO₂ is preferred in the anatase or rutile modification.

Anatase white pigments have a lesser light scattering capability but a slightly higher level of blue tint than rutile white pigments as well as lesser light stability and weather resistance, but lesser hardness and lesser abrasiveness. In addition anatase pigments are catalytically more active so that they can also already cause colour shifts towards yellow for example in the production of TiO₂-filled polyester fibres.

Hereinafter only a TiO₂ pigment is meant in abbreviation form by the term TiO₂ white pigment.

Of the two established TiO₂ production processes, only rutile can be produced with the chloride process while the sulphate process can be used to produce anatase and at higher cost levels also rutile. Rutile pigments with a higher level of blue tint and low abrasiveness such as for example for printing inks however can hitherto be produced when using both processes only with an increased level of economic expenditure while anatase pigments with catalytic inactivity, as in the case of simple rutile pigments, can be produced only by base substance doping with Sb, in addition with light stability as in the case of simple rutile pigments only by an additional special inorganic surface modification using Mn salts.

However, an anatase pigment with that base substance doping becomes excessively grey in paper laminates when exposed to light while the Mn stabilisation effect does not withstand for example the acid dyeing process in the case of nylon and is washed out of coats of paint and lacquer as well as plastic parts by rain and is therefore not weather-resistant.

To increase light and weather resistance, it is state of the art in relation to rutile pigments to dope the base substance with Al₂O₃, that is to say to dissolve Al₂O₃ in the lattice of the rutile crystal. In that case, more can be dissolved in the chloride process because of the higher production temperatures than in the sulphate process. In both processes however by virtue of the distribution equilibrium with the crystal surface in respect of submicrocrystals the doping component is always enriched at the surface. In that way the weather resistance can be improved by a factor of between 6 and 12 and more.

To further improve light stability and weather resistance but also to improve dispersibility and flocculation stability of the pigment in the system of use, a base substance can be surface-modified in both processes of pigment production with Al(OH)₃, silica, aluminosilicates and the like, that is to say in general entirely or partially covered with such a layer. In that case the component can be selected in accordance with the planned field of use of the pigment. In that way weather resistance - with good adaptation to the respective system of use - can be again improved up to the same order of magnitude as by means of base substance doping.

While the rutile modification can be doped with many metal oxides and it is only necessary to ensure that the rutile crystal is not coloured thereby, the anatase crystal still cannot even be doped with Al₂O₃. Hitherto only the possible option of doping with Sb₂O₃ was found for anatase pigments. It will be noted in that respect however that the weather resistance is improved only slightly by the factor of an order of magnitude corresponding to the factor by which undoped rutile is more weather-resistant than undoped anatase.

Anatase pigments with a certain degree of light resistance are known in the state of the art.

JP 2004196641 describes a solid solution of Nb oxide in TiO₂ with 1.5 - 50 mol% Nb/(Ti + Nb), wherein the anatase crystal lattice, even also with enlargement of the elementary cell and the spacing of the energy bands, in relation to pure anatase, is retained, and wherein optionally an oxide of a trivalent metal such as Fe, Cr, Al, Ga, Sc, Co, Mn, Ni and In can be dissolved in the crystal lattice. In that respect in accordance with the information in JP 2004196641 that anatase structure is stable only with a crystallite size below 100 nm, preferably between 10 - 40 nm. According to JP 2004196641 the product of such nanoparticles is more effective than pure nanoanatase in catalysis and photocatalysis.

In addition JP 11349329 describes a TiO₂ white pigment, preferably in the anatase modification, comprising a crystalline core and an amorphous layer which is 0.01 - 50 nm thick (claimed, experimentally proven 3 nm) thereon of Nb oxides or Nb-Ti mixed oxides. The core can be doped distributed uniformly over the volume with 0.02 - 0.4% Al or 0.05 - 1.0% Zn.

In addition DE 102007 027 361 discloses a doped anatase. In accordance therewith in particular catalytic activity of the anatase pigment is reduced by a base substance doping with 0.05 to 1% by weight of antimony ions, with respect to TiO₂, wherein there are > 60% of the Sb in the oxidation number + 5. The light resistance of the anatase pigment is achieved in particular by an inorganic surface coating on the base substance which contains between 0.05 and 0.8% Mn, wherein the Mn is preferably present at more than 5% in the oxidation number + 2.

In accordance with US No 6 113 873 in the usual sulphate process anatase can also be doped with water-soluble Al and/or Zn salts in the calcination operation. The anatase white pigments obtained are said to have improved brightness and thermostability in PE film and light resistance in an aqueous melamine resin lacquer. In addition, a part of the added Al and Zn amounts was dissolved out by one-off extraction with dilute HCl and it was concluded therefrom that this is the portion on the surface of the anatase crystal and the remainder must be dissolved in the crystal interior. The inventors' tests proved that, for complete extraction of the surface portion, extraction four to five times is however required (U. Gesenhues, Solid State Ionics 101-103 (1997) 1171) and anatase, unlike rutile, could not be doped with Al upon annealing with m-titanic acid. The products described in US No 6 113 873 in addition, according to the inventors' findings, are not light-resistant in all systems of use and are in no case weather-resistant.
In accordance with JP 2005089213 rutile is mixed with Al, Ga or In compounds and subjected to heat treatment firstly in an NH₃ atmosphere and then air. In that way rutile is said to be converted for the large part thereof into anatase. Complete conversion however does not occur even with large added amounts. The anatase-rutile mixture produced is already said to exhibit photocatalytic activity under weak UV light. WO2007/141342 discloses anatase white pigments doped with 0.05 to 1 wt% of antimony wherein there are at least 60 % of the Sb in the oxidation state +5 thereby reducing the catalytic activity of the anatase pigment. The light resistance of said pigment is achieved by an inorganic surface coating on the base substance which contains manganese, aluminum, zirconium, silicon or titanium.

Thus, summarising the foregoing, it is known in the state of the art that doping of anatase, if at all possible depending on the respective element involved, can reduce, increase or also not influence the photocatalytic activity of TiO₂.
The object of the invention is to overcome the disadvantages of the state of the art in respect of the properties of doped anatase white pigments and to provide more effective base substance doping for anatase to increase light and weather resistance.
It was surprisingly found on the part of the inventors that an anatase pigment with such improved properties can be afforded in that the anatase white pigment is doped in compensatory mode by the incorporation in the crystal of a trivalent cation selected from Al, Ga, In and Ce and a further cation selected from a pentavalent cation selected from Sb and Nb and a monovalent cation selected from Li, Na and K with the proviso, that the monovalent cation is only selected in combination with Ga or In as the trivalent cation. In that respect the further cation is present in an amount of less than 1.5 mol% with respect to Ti in the base substance.

In an embodiment the anatase white pigment is present therein at at least 98.5% in the anatase modification and the remainder as rutile and the molar ratio of the trivalent cation to the second cation is between 0.3 and 6.0.

According to the invention the term white pigment is used to denote such a pigment which has a crystallite size of more than 100 nm. For optimum light scattering capability without a high level of colour tint, the TiO₂ white pigments according to the invention have a crystallite size of between 150 and 300 nm.

At this point it is pointed out that according to the invention - as a distinction in relation to the production of solid solutions - doping is used to mean the addition of such small amounts to TiO₂ that the dimensions of the elementary cell of the crystal and the spacing of the energy bands change at any event only immaterially. In addition doping means the uniform distribution of a considerable proportion of the doping element used in manufacture, over the entire TiO₂ crystal. In that respect the crystallite size of the TiO₂ crystal according to the invention is at least 100 nm as specified above, which corresponds to a BET of a maximum of 20 m²/g and the distribution of the doping is thermally stable up to at least 350°C in accordance with the requirements involved in pigment processing.

A smaller crystal (nanocrystal) can also often still be doped with elements which cannot be incorporated in the larger crystal. Thus, in the case of the hydrothermal process which is occasionally used for the production of nanocrystals distributions are often generated within the crystal, which are no longer stable at the higher temperatures required for the production of larger crystals. In addition the doping element can be incorporated in the interior of the nanocrystal with a different defect structure than in the large crystal. The surface zone which is 2 - 10 nm thick has generally a different defect structure from the crystal interior and plays a much greater part in the case of the nanoparticles by virtue of the large proportion by volume thereof in a crystal. The same material which is formally equally doped therefore often has different properties and a different structure in the form of nanoparticles or in the form of larger particles and is not to be equated in respect of its crystal structure.

With the doping according to the invention the inventors base themselves on the consideration that doping on the basis of the principle of compensatory doping can be performed at the same time with oxides of lower-valence and higher-valence metals than Ti. For the doping according to the invention the starting compounds in the form of their salts are used, with the specified valences.

That doping was used by the inventors, as the origin of the photocatalytic activity of TiO₂ is the absorption of light with the production of electrons and defect electrons which can both diffuse out of the interior of the TiO₂ particles to the surface and can there be involved in redox reactions with the matrix. With the compensatory doping used according to the invention trapping sites and recombination centres are produced in the interior for both kinds of charge carrier so that both charges come more slowly or not at all to the surface. Because the lower-valence and the higher-valence metal ion can also be incorporated in adjacent relationship on Ti sites in the lattice, that is to say substitutionally, without disrupting the anion lattice and for local compensation of the cation charges, photocatalytic activity can be particularly effectively reduced.

For compensatory doping for anatase, which is proposed by the inventors, the invention affords the combinations of Al(+3)+Sb(+5), AI(+3) +Nb(+5), Ga(+3) + Sb(+5), Ga(+3) +Nb(+5), In(+3) + Sb(+5), In(+3) + Nb(+5), Ce(+3) + Sb(+5) and Ce(+3) + Nb(+5). In can also be present in the oxidation number +1, Ce and Nb can also be present as +4 and Sb +3, but those oxidation numbers should be suppressed by the combination with the respective appropriate second doping element.

The inventors further discovered that in particular cases, if the trivalent cation is just as large or larger than Ti(+4) in accordance with the ion radius table in accordance with Goldschmidt (for example in F A Cotton and G Wilkinson: Anorganische Chemie; Verlag Chemie, Weinheim 1970 - page 41) and the element cannot assume a higher oxidation number, thus as in the case of Ga and In, the second pentavalent cation can be replaced by a monovalent ion like Li(+). In that case the monovalent cation can be incorporated at interstitial cation sites and thus restore electroneutrality. Photostabilisation of the TiO₂ pigment is then achieved by the action of the trivalent cation as a weak trap for defect electrons.
According to the invention the anatase pigment can thus be produced by the cations used for doping being added in the form of their water-soluble salts or their solid hydroxides, oxyhydroxides or oxides, preferably with a mean particle size of below 2 µm, to m-titanic acid, in production using the sulphate process.
As was previously discovered by the inventors, the doping element can in principle influence all reactions during TiO₂ white pigment calcination. In order however not to interfere with TiO₂ crystal growth in the first growth phase it is possible alternatively to proceed in such a way as to add the doping element in the form of a less reactive or thermally stable compound. That can also be the oxides of the doping element, but also particular salts and mineral compounds of the doping elements. The operating procedure to be applied can in practice be easily checked insofar as the m-titanic acid which is obtained using the sulphate process and which is bleached and which is prepared for calcination is first incompletely annealed, then doped by impregnation and finally annealed to give the anatase pigment.

In particular anatase white pigments which are as light-resistant and weather-resistant as rutile white pigments can replace the rutile pigments used exclusively hitherto, with the advantage of lower abrasion, in printing inks for paper, cardboard, plastic material and metal, with particular demands on light and weather resistance. In accordance with the state of the art commercial anatase pigments have about 10 to a maximum of about 20 mg abrasion wear, rutile pigments in accordance with the sulphate process have about 20 to 30 mg and rutile pigments in accordance with the chloride process have about 30 to 40 mg abrasion wear, wherein the abrasion wear was measured with the Cu bar abrasion method (described by B Vielhaber-Kirsch and E W Lube, Farbe + Lack 1995, Issue 8, page 679 and Kronos-Information 6.30).

According to the invention the anatase pigments have an abrasiveness of a maximum of 20 mg, determined in accordance with the aforementioned method.

In addition such anatase white pigments according to the invention also open up the use of TiO₂ pigments in UV-hardening lacquers as the UV-absorption of the anatase modification of TiO₂ begins only at 381 nm, compared to 407 nm in the case of rutile.

For economic reasons the added amount of some doping elements used according to the invention such as Ce, Nb and Ga can be limited in the commercial production of the new anatase white pigments and displacement thereby of technical solutions already on the market.

It may be advantageous if the anatase pigment according to the invention is further inorganically and/or organically surface-modified. In that case the anatase pigment can be inorganically surface-modified in that it has been subjected to a treatment with Al₂(SO₄)₃ and/or NaAlO₂ solution, water glass and phosphate salt solutions. Equally anatase pigment can be organically surface-modified for example by having been subjected to a treatment with trimethylolpropane or silicone oils. The invention is further described hereinafter by means of the following Examples.

### Example 1: Doping with Ce (not part of the invention)

Bleached m-titanic acid produced using the sulphate process and mixed ready with annealing salts for the calcination to give anatase white pigments was dried, then impregnated with different amounts of an aqueous solution of Ce(NO₃)₃ x 6 H₂O in an IKA impact mill. The added amounts of Ce per Ti in the m-titanic acid (in mol%) are shown in Table 1. The liquid volumes were always so selected that no perceptible moisture occurred on the m-titanic acid powder. The powder was dried again, then annealed in a muffle furnace for 90 min at different temperatures so that the result was annealed products both with CBU 17 - 18 (CBU see below) and also therebelow and thereabove.

### Example 2: Doping with Nb (not part of the invention)

Operation was as in production Example 1 but instead of Ce(NO₃)₃ x 6 H₂O a commercially available preparation of Nb-NH₄ oxalate (white powder, water-soluble) with an Nb content of 19.7% was used. The doping amounts are specified in Table 1.

### Example 3: Doping with Ce and Nb jointly

Operation was as in production Examples 1 and 2, the two doping operations were successively applied to cause no perceptible moisture to occur. The doping amounts are specified in Table 1.

### Example 4: Further compensatory dopings according to the invention

Al + Nb: operation was as in production Example 3, but instead of the cerium III nitrate solution an aqueous Al₂(SO₄)₃ solution was used.
Ce + Sb: an aqueous suspension of bleached m-titanic acid, produced using the sulphate process, and containing the same salts for anatase white pigment calcination as the starting material for the annealing operations of Examples 1 to 3 was mixed with different amounts of cerium III nitrate solution and aqueous 60% Sb₂O₃ paste from Aquaspersions Ltd, Halifax, West Yorkshire, England, dried and annealed as previously.
Al + Sb: operation was as previously for Ce + Sb, but with Al₂(SO₄)₃ solution instead of the cerium III nitrate solution. The doping amounts for all three systems are specified in Table 3.

### Example 5: Doping of initially calcined m-titanic acid with Ce + Nb

Bleached m-titanic acid was annealed as in production Example 1 for 7h at temperatures rising to 825°C, then as in production Example 3 impregnated jointly with Ce and Nb and annealed in the muffle furnace to the same CBU values. The doping amounts are specified in Table 4.

### Example 6: Doipings with Ga (not part of the invention). Ga + Nb, Ga + (and) Li, In (not part of the invention), In + Nb

Bleached m-titanic acid was dried as in production Example 1, successively impregnated with dilute aqueous salt-acid solutions of GaOOH and In₂O₃, the aqueous solution of the Nb-NH₄ oxalate preparation from Example 2 or an aqueous solution of LiCl as in production Example 1 respectively and dried (again) and finally annealed in the muffle furnace. The doping amounts are specified in Table 5.

### Comparative Examples (state of the art): Doping with Sb₂O₃

Investigations were carried out with the commercially available pigments, as follows:
- Hombitan LW-S (uncoated and undoped TiO₂ anatase)
- Hombitan LW-S-U (uncoated TiO₂ anatase with Sb doping 0.28 - 0.30% Sb, calculated as Sb₂O₃ corresponding to 0.16 mol% Sb/Ti)
- Hombitan R 320 (untreated and micronised rutile pigment doped with 0.20% Al₂O₃ corresponding to 0.31 mol% Al/Ti)
- Hombitan LO-CR-S-M (anatase doped with 0.28 - 0.30% Sb calculated as Sb₂O₃ as well as especially inorganically surface-modified).
The doping amounts and results are also specified in Table 1.

### Investigations of the products from the Examples and results:

The products of the production Examples were subjected to ball grinding for 30 min and then investigated together with the comparative products. The following investigations were carried out:
- X-ray diffractometry in relation to the ratio of anatase and rutile therein (as is usual in the case of TiO₂ white pigment manufacturers for production control and finished product clearance)
- Determining the HCl soluble proportion of the doping elements in accordance with DIN 53770:
   If a high value is found for a doping element, that indicates that the added compound has not yet reacted (exception here: Sb₂O₃ is not HCl-soluble) or is in the surface zone of the TiO₂ crystal (Example: Ce here at low annealing temperatures, Al as the sole doping element). A low value indicates that the doping element has either been incorporated as desired in the TiO₂ crystal (Example: Ce here at high annealing temperatures, Nb here at all annealing temperatures for TiO₂ white pigments with suitable CBU) or the doping compound has been converted by annealing into a less soluble one (generally seldom with small doping amounts).
- Determining the specific BET surface area:
   In the case of TiO₂ white pigments the TiO₂ crystallite size can be determined directly only with an effort. It can however be quite accurately estimated from the specific surface area (U Gesenhues, J Nanoparticle Res 1 (1999) 223) and thus permits distinction of the products according to the invention from nanomaterials.
- Determining the CBU and the relative scattering capability in grey paste in accordance with DIN 53165, ISO 787-24
   The CBU (carbon black undertone) is the blue tint (high value > 13) or yellow tint (lower value) that a white pigment produces when rubbed out with carbon black paste to give a grey paste, measurement and computing methods are described in US No 2 488 439. The CBU characterises the colour tint, that TiO₂ white pigments produce in systems of use in a mixture with other pigments.
- Determining the chromaticity values and photocatalytic activity:
   Mixing in a mortar with 0.35% trimethylolpropane from an aqueous solution, then incorporation at 0.5% in polyamide 6 (commercial product Ultramid B2715), production of 3 mm thick injection moulded plates and brief weathering in the Weather-o-meter C165 from Atlas Electric Devices Co, USA. Prior to the brief weathering and then every 24h, the chromaticity values L*, a* and b* were recorded from the polyamide plates in accordance with ISO 7724 as well as the 20° and 60° gloss in accordance with ISO 2813. The b* value characterises the colour tint that in the systems of use TiO₂ white pigments produce in the absence of other pigments (negative value: blue tint, positive value: yellow tint). The gloss exhibited the same progression in respect of time in all samples: firstly a plateau of differing length at the initial value of 92 - 95%, then an s-shaped drop to a few % with parallel curves for all samples. As explained in the case of U Gesenhues, Polym. Degrad. Stab. 68 (2000), page 185, the average service life of the shiny surface can be determined from the drop in the 60° gloss for the plates with the different pigments. In accordance with the Weibull model of cumulative breakdown statistics the average life corresponds to the weathering duration until the gloss has fallen to 1/e = 37% of the initial value and the reciprocal value of the life is proportional to the photocatalytic activity of the TiO₂ pigment in the polymer. The ratio of the service lives in the case of a doped pigment to an undoped pigment corresponds to the factor by which doping prolongs the service life (light resistance or photostability or weather resistance).

The results for the products with those investigation methods are set out in Tables 1 - 5, in which respect the following is also to be noted:
The specific surface area of all samples in Table 1 was between 6 and 17 m²/g, that of the samples in Table 2 was between 7 and 10 m²/g, in Table 3 it was between 9 and 12 m²/g while in Table 5 it was between 10 and 19 m²/g.
- Determining the total content in the pigments of doping elements and further investigations
   In addition the total content of doping elements was also determined inter alia by ammonium sulphate-sulphuric acid decomposition treatment and ICP, as well as the particle size distribution. The added amounts of the doping elements were always found again in the chemical analyses.
- Determining the crystalline components of the pigments
   X-ray diffractometry was also used to test for the presence of other crystalline components than TiO₂, in particular the oxides of the doping metals individually or mixed compounds thereof with TiO₂ or with each other. In all examples however no or only very weak and wide non-identifiable reflections were observed besides the intensive sharp TiO₂ reflections.
- Determining the distribution and oxidation numbers of Ce and Nb in anatase doped in each case with 1 mol% Ce and Nb and annealed at 850 and 890°C with TEM and XPS
   The distribution of Ce and Nb over the particles was investigated with EDX-Nanobeam and Linescan on Ce, Nb and Ti in TEM. No particles without Ti were observed, that is to say with Ce or Nb in each case alone or Ce and Nb together, and in the context of measurement accuracy the distribution of Ce and Nb was uniform over the volume of the particles, without local enrichments - not even at the surface. XPS was used to investigate the outer layers of the crystals of 5 - 10 nm. For the annealed product at 850°C the measured composition of the layer was 5.0 mol% Ce/Ti and 2.3 mol% Nb/Ti, in the case of the 890°C product those were 1.2 mol% Ce/Ti and 5.8 mol% Nb/Ti. That means that the doping elements are only slightly enriched in the surface zone, within the limits of measurement accuracy, and are thus almost uniformly distributed over the volume of the particles. Of Ce, half is at the oxidation number +3, the remainder at +4; in the case of Nb half is at +5 and the remainder at +4. That means that half the added doping amounts are incorporated in accordance with compensatory doping in TiO₂, whereby the measured photostabilising action of the doping according to the invention can be explained.
- Measurement of the catalytic activity of the pigments
   Of the following pigments from production Example 3, relatively large amounts with CBU > 14 were produced and tested for catalytic activity as follows after vapour jet grinding:
   1. Anatase undoped;
   2. Anatase doped with:
      a. 0.25 mol% Ce + 0.50 mol% Nb,
      b. 0.5 mol% Ce + 0.5 mol% Nb,
      c. 0.5 mol% Ce + 1.0 mol% Nb, and
      d. 1.0 mol% Ce + 1.0 mol% Nb.

   For that purpose p-terephthalic acid was polycondensed in an ethyleneglycol slurry in the presence of the catalysts usually employed in the state of the art, and the TiO₂ pigment to be tested. The chromaticity values L*, a* and b* were determined in respect of the PET chips obtained. The higher the level of yellow tint, the correspondingly more active is the pigment. The four doped pigments all resulted in a lower yellow tint in the PET chips, in comparison with the undoped pigment.
- Measurement of the abrasive properties of the pigments
   Of the same five pigments (1, 2a to 2d as hereinbefore in production Example 3) abrasiveness was also determined with the Cu bar abrasion method (described by B Vielhaber-Kirsch and E W Lubbe, Farbe + Lack 1995, Issue 8, page 679 and Kronos-Information 6.30) and compared to that of Hombitan LW-S and Hombitan R320. 16 mg was found for Hombitan LW-S and 27 mg was found for Hombitan R320 while the values for the five pigments (1, 2a to 2d) in accordance with production Example 3 were between 8 and 14 mg.

As the inventors established on the basis of the results the products according to the invention contain TiO₂ crystals of white pigment size and no nanoparticles. In addition, Ce alone is first incorporated into the crystal at high annealing temperatures where the blue tint of anatase already begins to fall by virtue of its primary particle size, and in that case enhances weather resistance, but only slightly increases the yellow tint. In comparison Nb alone is already completely incorporated at lower temperatures and slightly improves weather resistance without increasing the yellow tint.

With joint doping with Ce and Nb Ce is already incorporated alone at lower temperatures, particularly with an Nb excess. It will be noted however that with joint doping brightness falls and the yellow tint increases, which is increased in the case of equimolar doping. That however does not reach the level of rutile. At any event, with joint doping, the weather resistance rises above the values which could be achieved with the elements alone or with mixtures thereof without a synergistic action with the same total doping amount. Without a synergistic action the light resistance factor, in the case of joint doping, would correspond to the product of the factors of the two individual dopings.

The inventors thus found that, by equimolar, that is to say genuinely compensatory, doping with Ce and Nb, an anatase white pigment base substance can be produced in a form of being more light-resistant and more weather-resistant than an undoped rutile pigment base substance and just as resistant as a slightly Al-doped rutile pigment base substance. That improvement is already achieved with economically low doping amounts.

The doped anatase pigment according to the invention has the advantage of lesser abrasion. Its light resistance and weather resistance can be further enhanced by inorganic surface modification in accordance with the state of the art. If an acid-stable surface modification is adopted the improvement achieved is admittedly not by the factor as with the specific inorganic modification, inter alia with Mn salts, but for Hombitan LO-CR-S-M (see above), the higher stability of the white pigment base substance nonetheless means that the result is a product which is at least equally light-resistant and weather-resistant as LO-CR-S-M, with the advantage that the resistance is acid-stable.

If m-titanic acid is doped only after initial calcination, with joint doping with Ce and Nb, the result is anatase pigments with light and weather resistances which are not so high in relation to the previously doped m-titanic acid but which are still improved over the state of the art.

Alternative joint doping with Al and Nb admittedly leads to an anatase pigment with immobilised Al but without a change in brightness and yellow tint and with a marginal improvement in weather resistance. Joint doping with Ce and Sb reduces brightness and increases the yellow tint to a moderately great degree. It further improves light and weather resistance but only a little more than with Sb alone or non-synergistically with Ce.

Joint doping with Al and Sb slightly reduces brightness, does not alter the yellow tint and does not increase the light and weather resistance as greatly as Sb alone. Doping with Al and Sb and the 2 preceding dopings with Ce and Sb and with Al and Nb respectively do however have the advantage that therewith the development of the pigment properties in the calcination of the pigment base substance is easier to control.

Doping with Ga alone improves light and weather resistance slightly more greatly than with Sb. The effect turns out to be even greater with joint doping with Nb, but it will be noted that in that case brightness falls and the yellow tint increases slightly. Admittedly with joint doping with Li more Ga can be bound in the TiO₂ than without, but that results in a not entirely as great increase in light and weather resistance as without, while in addition Li promotes the conversion of the TiO₂ into rutile. Overall doping with Ga and possibly Nb or Li as a substitute for Sb is appropriate.

Doping with In alone or together with Nb can admittedly improve light and weather resistance as greatly as Sb, but with a slight impairment of brightness and blue tint in PA 6.

Thus, an anatase pigment according to the invention has a CBU of at least 13. The b* value in polyamide 6 is preferably between -2.5 and +3.5.

By virtue of the improved properties in light and weather resistance the anatase pigment according to the invention as an additive in polymers and plastics, including synthetic fibres, films, foils, shaped parts and composite materials containing polymers as well as paints and lacquers including UV-hardening lacquers. That includes use in polyvinylchloride, polyolefins, polystyrene, polyacrylonitrile, polymethylmethacrylate, polyester, polylactide, polyamides, cellulose acetate, viscose, epoxy and melamine resins, and printing inks for paper, cardboard, plastic and metal.

**Table 1 Production and properties of the products from Examples 1 - 3 Dopings of m-titanic acid with Ce and Nb**

| **Doping** | **Annealing temp. [°C]** | **% rutile (rest anatase)** | **HCl-soluble portions [ppm]** | **CBU** | **In PA 6** | | | |
|---|---|---|---|---|---|---|---|---|
| | | | | | **L* [%]** | **b*** | **60°-gloss: service life [h]** | **Light resistance factor of the pigment, standardised (a)** |
| Hombitan LW-S | | | | 15.8; 16.6 | 91.5; 90.7 | -0.7; -1.3 | 66; 58 | |
| Hombitan LW-S-U | | | | 16.4 | 91.0 | -1.1 | 125 | rel to LW-S : 1.89 |
| Hombitan R320 | | | | 10.4; 11.2 | 90.7; 91.0 | +3.3; +2.8 | 245; 214 | rel to LW-S : 3.71 ; 3.69 |
| Anatase: undop. | 890 | 0 | | 18.6 | 91.3 | -1.1 | 68 | = 1.00 |
| | 940 | 0.2 | | 11.8 | 90.0 | -0.5 | 116 | |
| Anatase: undop. | 900 | 0 | | 18.1 | 90.9 | -1.3 | 54 | = 1.00 |
| | 910 | 0 | | 15.9 | 91.5 | -0.9 | 62 | |
| + 0.25 mol% Ce | 860 | 0 | Ce: 320 | 17.6 | 89.1 | +1.2 | 88 | 1.37 |
| | 890 | 0 | Ce: 40 | 15.8 | 90.4 | +0.9 | 71 | |
| + 0.50 mol% Ce | 860 | 0 | Ce: 550 | 17.6 | 89.1 | +1.6 | 86 | 1.45 |
| | 890 | 0 | Ce: 50 | 12.8 | 90.3 | +1.4 | 82 | |
| + 0.75 mol% Nb | 910 | 0 | Nb: < 5 | 18.2 | 89.9 | -2.0 | 79 | 1.47 |
| | 950 | 0 | Nb: < 5 | 16.3 | 90.6 | -1.5 | 92 | |
| + 1.50 mol% Nb | 910 | 0 | Nb: < 5 | 17.5 | 89.7 | -2.4 | 101 | 1.93 |
| | 940 | 0.3 | Nb: < 5 | 12.8 | 90.2 | -1.1 | 123 | |
| + 0.50 mol% Ce | 850 | 0 | Ce: 390; Nb: < 50 | 15.9 | 87.2 | +0.8 | 232 | 3.41 |
| + 0.50 mol%Nb | 890 | 0.2 | Ce: 40; Nb: < 50 | 12.0 | 88.0 | +0.9 | 201 | |
| + 1.0 mol% Ce | 850 | 0 | Ce: 940; Nb: < 50 | 17.4 | 83.4 | +0.8 | 269 | 3.96 |
| + 1.0 mol% Nb | 890 | 0.5 | Ce: 70; Nb: < 50 | 11.2 | 86.7 | +1.0 | 246 | |
| + 0.25 mol% Ce | 870 | 0 | Ce: 150; Nb: < 5 | 17.1 | 87.9 | +0.4 | 123 | 2.24 |
| + 0.50 mol% Nb | 890 | 0 | Ce: 60; Nb: < 5 | 16.1 | 88.9 | +0.7 | 136 | |
| + 0.5 mol% Ce | 850 | 0 | Ce: 330; Nb: < 5 | 16.8 | 86.8 | +0.6 | 136 | 2.34 |
| + 1.0 mol% Nb | 890 | 0 | Ce: 20; Nb: < 5 | 14.3 | 88.4 | +0.9 | 136 | |

| | | | | | | | | |
|---|---|---|---|---|---|---|---|---|
| a) R320 / LW-S = 3.71 established | | | | | | | | |

**Table 2 Production and properties of the products from Example 4 Doping of m-titanic acid with Al and Nb**

| **Doping** | **Annealing temp. [°C]** | **% rutile (rest anatase)** | **HCl-soluble portions [ppm]** | **CBU** | **In PA 6** | | | |
|---|---|---|---|---|---|---|---|---|
| | | | | | **L* [%]** | **b*** | **60°-gloss: service life [h]** | **Light resistance factor of the pigment** |
| Hombitan LW-S | | | | | 91.1 | -1.2 | 47 | |
| Hombitan R320 | | | | | 90.6 | +3.9 | 200 | rel to Hombitan LW-S : 4.26 |
| Anatase: undop. | 930 | 0 | | 18.0 | 91.5 | -1.1 | 47 | =1.00 |
| | 950 | 0 | | 14.3 | 91.4 | -0.8 | 63 | |
| + 0.08 mol% Al | 930 | 0 | Al: 14; Nb: < 5 | 18.1 | 91.1 | -1.6 | 60 | 1.15 |
| + 0.08 mol% Nb | 950 | 0.34 | Al: 11; Nb: < 5 | 17.1 | 91.5 | -1.3 | 66 | |
| + 0.08 mol% Al | 950 | 0 | Al: 15; Nb: < 5 | 17.5 | 91.1 | -1.5 | 70 | 1.28 |
| + 0.16 mol% Nb | 970 | 0 | Al: 17; Nb: < 5 | 16.3 | 91.2 | -1.2 | 71 | |
| + 0.16 mol% Al | 950 | 0 | Al: 51; Nb: < 5 | 16.7 | 91.2 | -1.1 | 66 | 1.27 |
| + 0.16 mol% Nb | 970 | 0.1 | Al: 55; Nb: < 5 | 15.1 | 91.3 | -0.9 | 74 | |
| + 0.16 mol% Al | 950 | 0 | Al: 23; Nb: < 5 | 17.5 | 91.1 | -1.5 | 70 | 1.28 |
| + 0.32 mol% Nb | 970 | 0 | Al: 20; Nb: < 5 | 16.9 | 91.2 | -1.2 | 71 | |

**Table 3 Production and properties of the products from Example 4 Doping of m-titanic acid with Ce and Sb as well as Al and Sb**

| | **Annealing temp. [°C** | **% rutile (rest anatase)** | **HCl-soluble portions [ppm]** | **CBU** | **In PA 6** | | | |
|---|---|---|---|---|---|---|---|---|
| | | | | | **L* [%]** | **b*** | **60°-gloss:** service life [h] | **Light** resistance factor of the **pigment** |
| Hombitan LW-S | | | | | 91.1 | -1.2 | 47 | |
| Hombitan R320 | | | | | 90.6 | +3.9 | 200 | rel to LW-S : 4.26 |
| Anatase: undop. | 900 | 0 | | 18.2 | 91.6 | -1.2 | 52 | =1.00 |
| | 930 | 0 | | 15.9 | 91.7 | -0.8 | 61 | |
| + 0.15mol% Ce | 900 | 0 | Ce: 40; Sb: < 5 | 17.5 | 90.1 | +0.3 | 97 | 1.82 |
| + 0.15 mol% Sb | 930 | 0.41 | Ce: 90; Sb: < 5 | 15.9 | 90.8 | -0.1 | 107 | |
| + 0.15 mol% Ce | 900 | 0 | Ce: 20; Sb: < 5 | 17.8 | 89.8 | +0.1 | 107 | 2.00 |
| + 0.30 mol% Sb | 930 | 0 | Ce: 30; Sb: < 5 | 16.3 | 90.4 | +0.3 | 117 | |
| + 0.30 mol% Ce | 900 | 0 | Ce: 20; Sb: < 5 | 16.8 | 89.7 | +1.1 | 124 | 2.18 |
| + 0.30 mol% Sb | 930 | 0 | Ce: 60; Sb: < 5 | 15.6 | 90.2 | +0.8 | 121 | |
| + 0.30 mol% Ce | 900 | 0 | Ce: 60; Sb: < 5 | 18.0 | 89.5 | +1.5 | 128 | 2.25 |
| + 0.60 mol% Sb | 930 | 0 | Ce: 30; Sb: < 5 | 16.5 | 89.5 | +1.5 | 124 | |
| + 0.075 mol%Al | 900 | 0 | Al: 16; Sb: < 5 | 17.6 | 90.6 | -1.2 | 71 | 1.39 |
| + 0.075 mol% Sb | 930 | 0 | Al: 11; Sb: < 5 | 16.1 | 91.1 | -1.1 | 84 | |
| + 0.075 mol% Al | 900 | 0 | Al: 14; Sb: < 5 | 17.6 | 90.6 | -1.4 | 75 | 1.38 |
| + 0.15 mol% Sb | | | | | | | | |
| | 930 | 0.34 | Al: 12; Sb: < 5 | 15.1 | 90.8 | -0.9 | 79 | |
| + 0.15 mol% Al | 900 | 0 | Al: 30; Sb: < 5 | 17.0 | 90.8 | -1.2 | 75 | 1.41 |
| + 0.15 mol% Sb | 930 | 0.30 | Al: 25; Sb: < 5 | 15.9 | 91.1 | -1.1 | 83 | |
| + 0.15 mol% Al | 900 | 0 | Al: 20; Sb: < 5 | 17.6 | 90.1 | -1.0 | 84 | 1.54 |
| + 0.30 mol% Sb | 930 | 0 | Al: 20; Sb: < 5 | 15.9 | 90.8 | -0.5 | 88 | |

**Table 5 Production and properties of the products from Example 6 Doping of m-titanic acid with Ga, Ga und Nb, Ga und L, In, In und Nb**

| **Doping** | **Annealing temp. [°C** | **% rutile (rest anatase)** | **HCl-soluble portions [ppm]** | **CBU** | **In PA 6** | | | |
|---|---|---|---|---|---|---|---|---|
| | | | | | **L* [%]** | **b*** | **60°-gloss: service life [h]** | **Light resistance factor of the pigment** |
| Anatase: undop. | 930 | 0 | | 17.8 | 91.7 | -1.0 | 50 | = 1.00 |
| | 950 | 0 | | 14.5 | 91.3 | -0.9 | 65 | |
| | | | | | | | | |
| | | | | | | | | |
| | | | | | | | | |
| | | | | | | | | |
| + 0.08 mol% Ga | 930 | 0 | Ga: 20; Nb: < 5 | 17.9 | 90.9 | -0.5 | 112 | 2.02 |
| + 0.08 mol%Nb | 950 | 0 | Ga: 40; Nb: < 5 | 15.4 | 90.3 | +0.2 | 121 | |
| + 0.16 mol% Ga | 930 | 0 | Ga: 35; Nb: < 5 | 18.2 | 89.7 | -0.1 | 150 | 2.67 |
| + 0.16 mol% Nb | | | | | | | | |
| | 950 | 0 | Ga: 60; Nb: < 5 | 15.9 | 89.1 | +0.6 | 157 | |
| | | | | | | | | |
| | | | | | | | | |
| | | | | | | | | |
| | | | | | | | | |
| | | | | | | | | |
| | | | | | | | | |
| | | | | | | | | |
| | | | | | | | | |
| | 950 | 0 | Ga: 60; Nb: < 5 | 15.9 | 89.1 | +0.6 | 157 | |
| + 0.08 mol% Ga | 930 | 0 | Ga: 60 ; Li : 45 | 17.6 | 91.5 | -0.4 | 85 | 1.52 |
| + 0.08 mol% Li | 950 | 0.5 | Ga: 55; Li: 50 | 15.8 | 91.5 | +0.1 | 89 | |
| + 0.16 mol% Ga | 930 | 0 | Ga: 85; Li: 85 | 16.9 | 91.2 | -0.1 | 103 | 1.84 |
| + 0.16 mol% Li | 950 | 1.1 | Ga: 70; Li: 80 | 13.8 | 91.6 | +0.9 | 108 | |
| + 0.08 mol% In | 930 | 0 | In: 450 | 17.3 | 90.3 | -0.2 | 88 | 1.47 |
| | 950 | 0.2 | In: 150 | 15.8 | 89.6 | +0.4 | 80 | |
| + 0.16 mol% In | 900 | 0 | In: 1100 | 16.8 | 89.3 | -0.1 | 106 | 1.79 |
| | 930 | 0.7 | In: 400 | 14.1 | 88.2 | +0.9 | 100 | |
| + 0.08 mol% In | 930 | 0 | In: 320; Nb: < 5 | 17.5 | 89.8 | -0.4 | 101 | 1.81 |
| + 0.08 mol% Nb | 950 | 0 | In: 210; Nb: < 5 | 16.1 | 88.4 | +0.2 | 108 | |
| + 0.16 mol% In | 950 | 0 | In: 730; Nb: < 5 | 18.2 | 88.6 | +0.3 | 120 | 2.13 |
| + 0.16 mol% Nb | 970 | 0.1 | In: 270; Nb: <5 | 15.6 | 87.1 | +0.4 | 125 | |

## Claims

1. An anatase white pigment having a crystallite size of more than 100nm **characterised in that** the anatase white pigment is doped in compensatory mode with a trivalent cation selected from Al, Ga, In and Ce, and a further cation selected from the group consisting of a monovalent cation selected from Li, Na and K and a pentavalent cation selected from Sb and Nb, with the proviso, that the monovalent cation is only selected in combination with Ga or In as the trivalent cation, wherein the further cation is present in an amount of less than 1.5 mol% with respect to Ti in the base substance.

2. An anatase white pigment according to claim 1 **characterised in that** the TiO₂ is present therein at at least 98.5% in the anatase modification and the remainder as rutile and the molar ratio of the trivalent cation to the second cation is between 0.3 and 6.0.

3. An anatase white pigment according to one of the preceding claims wherein the anatase pigment is inorganically and/or organically surface-modified.

4. An anatase white pigment according to claim 3 wherein the anatase white pigment is inorganically surface modified by having been subjected to a treatment with Al₂(SO₄)₃ solution, NaAlO₂ solution, waterglass or phosphate salt solutions or mixtures thereof.

5. An anatase white pigment according to claim 3 wherein the anatase pigment is organically surface-modified by having been subjected to a treatment with trialkylolalkanes or silicone oils.

6. An anatase white pigment according to one of the preceding claims **characterised in that** its CBU (carbon black undertone) is at least 13.

7. An anatase white pigment according to claim 6 **characterised in that** its b* value in polyamide 6 is between -2.5 and +3.5.

8. An anatase white pigment according to one of the preceding claims with an abrasiveness of a maximum of 20 mg determined in accordance with the Cu bar abrasion method.

9. A process for the production of the anatase white pigment according to one of claims 1 to 8 **characterised in that** the cations used for doping are added in the form of their water-soluble salts or their solid hydroxides, oxyhydroxides or oxides, preferably with a mean particle size of below 2 µm, to m-titanic acid in production using the sulphate method.

10. Use of the anatase white pigment according to any one of claims 1-8 in polyamide 6 for imparting a service life of at least 80 h, determined from the drop in the 60° gloss, in brief weathering.

11. Use of the anatase white pigment according to one of claims 1 to 8 as an additive in polymers and plastics including synthetic fibres, films, foils, shaped parts and composite materials containing polymers and in paints and lacquers including UV-hardening lacquer.

## Patentansprüche

1. Anatasweißpigment mit einer Kristallitgröße von mehr als 100 nm, **dadurch gekennzeichnet, dass** das Anatasweißpigment mit einem dreiwertigen Kation, ausgewählt aus Al, Ga, In und Ce, und einem weiteren Kation, ausgewählt aus der Gruppe, die aus einem einwertigen Kation, ausgewählt aus Li, Na und K, und einem fünfwertigen Kation, ausgewählt aus Sb und Nb, besteht, kompensatorisch dotiert ist, mit der Maßgabe, dass das einwertige Kation nur in Kombination mit Ga oder In als dreiwertiges Kation ausgewählt ist, wobei das weitere Kation in einer Menge von weniger als 1,5 Mol%, bezogen auf Ti im Grundkörper, vorhanden ist.

2. Anatasweißpigment nach Anspruch 1, **dadurch gekennzeichnet, dass** das TiO₂ darin zu mindestens 98,5 % in der Anatasmodifikation und der Rest als Rutil vorliegt und das Molverhältnis des dreiwertigen Kations zum zweiten Kation zwischen 0,3 und 6,0 liegt.

3. Anatasweißpigment nach einem der vorhergehenden Ansprüche, wobei das Anataspigment anorganisch und/oder organisch oberflächenmodifiziert ist.

4. Anatasweißpigment nach Anspruch 3, wobei das Anatasweißpigment dadurch anorganisch oberflächen-modifiziert ist, dass es einer Behandlung mit Al₂(SO₄)₃-Lösung, NaAlO₂-Lösung, Wasserglas oder Phosphatsalz-Lösungen oder Gemischen davon unterzogen worden ist.

5. Anatasweißpigment nach Anspruch 3, wobei das Anataspigment dadurch organisch oberflächenmodifiziert ist, dass es einer Behandlung mit Trialkylolalkanen oder Silikonölen unterzogen worden ist.

6. Anatasweißpigment nach einem der vorhergehenden Ansprüche, **dadurch gekennzeichnet, dass** sein CBU (carbon black undertone) mindestens 13 beträgt.

7. Anatasweißpigment nach Anspruch 6, **dadurch gekennzeichnet, dass** sein b*-Wert in Polyamid 6 zwischen -2,5 und +3,5 liegt.

8. Anatasweißpigment nach einem der vorhergehenden Ansprüche mit einer Abrasivität von maximal 20 mg, bestimmt nach der Cu-Barren-Abriebmethode.

9. Verfahren zur Herstellung des Anatasweißpigmentes nach einem der Ansprüche 1 bis 8, **dadurch gekennzeichnet, dass** die zur Dotierung verwendeten Kationen in Form ihrer wasserlöslichen Salze oder ihrer festen Hydroxide, Oxyhydroxide oder Oxide, vorzugsweise mit einer mittleren Teilchengröße von unter 2 µm, zu m-Titansäure bei der Herstellung nach dem Sulfatverfahren zugegeben werden.

10. Verwendung des Anatasweißpigmentes nach einem der Ansprüche 1-8 in Polyamid 6 zur Verleihung einer Lebensdauer von mindestens 80 h bei der Kurzbewitterung, bestimmt aus dem Abfall des 60°-Glanzes.

11. Verwendung des Anatasweißpigmentes nach einem der Ansprüche 1-8 als Additiv in Polymeren und Kunststoffen, einschließlich Synthesefasern, Filmen, Folien, Formteilen und Polymere enthaltenden Verbundwerkstoffen, sowie in Farben und Lacken einschließlich UV-härtender Lacke.

## Revendications

1. Pigment blanc d'anastase possédant une taille de cristallites de plus de 100 nm **caractérisé en ce que** le pigment blanc d'anastase est dopé dans un mode de compensatoire avec un cation trivalent choisi parmi Al, Ga, In et Ce, et un cation supplémentaire choisi parmi le groupe constitué d'un cation monovalent choisi parmi Li, Na et K et un cation pentavalent choisi parmi Sb et Nb, à condition que le cation monovalent est uniquement choisi en combinaison avec Ga ou In comme le cation trivalent, dans lequel le cation supplémentaire est présent dans une quantité inférieure à 1,5 % molaire par rapport à Ti dans la substance de base.

2. Pigment blanc d'anastase selon la revendication 1, **caractérisé en ce que** le TiO₂ est présent dans celui-ci à au moins 98,5 % dans la modification d'anastase et le reste en tant que rutile et le rapport molaire du cation trivalent au second cation est compris entre 0,3 et 6,0.

3. Pigment blanc d'anastase selon l'une quelconque des revendications précédentes, dans lequel le pigment d'anastase présente une surface modifiée de manière inorganique et/ou organique.

4. Pigment blanc d'anastase selon la revendication 3, dans lequel le pigment blanc d'anastase présente une surface modifiée de manière inorganique en ayant été sujet à un traitement avec une solution de Al₂ (SO₄)₃, une solution de NaAlO₂, des solutions de verre soluble ou de sel de phosphate ou des mélanges de celles-ci

5. Pigment blanc d'anastase selon la revendication 3, dans lequel le pigment d'anastase présente une surface modifiée de manière organique en ayant été sujet à un traitement avec des trialkylolalkanes ou des huiles de silicone.

6. Pigment blanc d'anastase selon l'une quelconque des revendications précédentes **caractérisées en ce que** son CBU (sous-ton de noir de carbone) est d'au moins 13.

7. Pigment blanc d'anastase selon la revendication 6, **caractérisée en ce que** sa valeur b* dans du polyamide 6 est comprise entre -2,5 et +3,5.

8. Pigment blanc d'anastase d'un selon l'une quelconque des revendications précédentes présentant une abrasivité d'un maximum de 20 mg déterminée en accord avec la méthode d'abrasion d'une barre de Cu.

9. Processus destiné à la production du pigment blanc d'anastase selon l'une quelconque des revendications 1 à 8 **caractérisés en ce que** les cations utilisés pour le dopage sont ajoutés sous la forme de leurs sels hydrosolubles ou de leurs hydroxydes, hydroxydes ou oxydes solides, de préférence avec une taille de particule moyenne inférieure à 2 µm, à de l'acide m-titanique en production en utilisant la méthode de sulfate.

10. Utilisation du pigment blanc d'anastase selon l'une quelconque des revendications 1 à 8 dans du polyamide 6 pour la transmission d'une durée de vie d'au moins 80 h, déterminée à partir de la chute dans le brillant à 60°, dans des intempéries brèves.

11. Utilisation du pigment blanc d'anastase selon l'une quelconque des revendications 1 à 8 en tant qu'additif dans des polymères et des plastiques comprenant des fibres synthétiques, des films, des feuilles d'aluminium, des parties modelées et des matériaux composites contenant des polymères et dans des peintures et des laques comprenant de la laque durcissant aux UV.
